# EUROPEAN PATENT APPLICATION

(11) **EP 3 961 529 A1**
(43) Date of publication of application: **02.03.2022**
(21) Application number: 20193669.7
(22) Date of filing: 31.08.2020
(51) Int. Cl.: G06Q 10/06, G06Q 20/38

(54) **METHOD, DEVICE AND SYSTEM FOR MANAGING ASSET DATA IN AN INDUSTRIAL PLANT**

(71) Applicant: Siemens Aktiengesellschaft, 80333 München (DE)
(72) Inventor: K, Jayavenkateshwaran, 562125 Bangalore, Karnataka (IN); MISHRA, Nikhil, 302006 Jaipur, Rajasthan (IN)
(74) Representative: Patentanwaltskanzlei WILHELM & BECK

(57) **Abstract**

A method, device and system of managing asset data associated with assets in an industrial plant is provided. In one aspect, the method comprises receiving a request to access asset data stored in a distributed ledger system from an external entity, wherein the distributed ledger system comprises a block. Further, the block comprises a first transaction associated with the asset data, a second transaction associated with the asset data, and a security code associated with the first transaction and the second transaction. Furthermore, the request comprises at least one part of a unique key pair for accessing the asset data. The method additionally comprises validating the request to access the asset data from the external entity using the unique key pair and providing the access to the requested asset data stored in the distributed ledger system to the external entity if the request is successfully validated.

## Description

The present invention relates to a method, device and system for managing asset data in an industrial plant in a secured manner.

In an industrial plant, a plurality of assets may generate a plurality of data associated with the functioning of the plant. Such data may include sensor data associated with each of the assets in the plant. Auditing operations in the plant is an essential and mandatory process which may involve review of the plurality of data generated in the technical installation. Auditing operation enables adherence to regulations which may be internal or associated with external entities such as certifying agencies, government regulating agencies, etc. There may exist chances of malpractice in plants where the data associated with the plant may be tampered. Since authenticity of the plurality of data is crucial for the efficiency of the auditing process, any compromise in the quality of the data must be avoided.

Currently, auditing operation may be performed by the agencies by verifying available records for the plurality of data associated with the plant. However, these records may not be authentic and therefore may affect the auditing process.

Therefore, there is a need for a method and system that can effectively manage asset data in the industrial plant.

The object of the invention is therefore to provide a method, device and system for managing asset data associated with one or more assets in an industrial plant. The one or more assets may be robots, sensors, actuators, machines, or other field devices present in the industrial plant. The one or more assets may generate one or more data which may be an indication of functioning of the industrial plant. In an embodiment, the asset data is recorded and stored in a distributed ledger system. The distributed ledger system may be a blockchain network. The blockchain network may include a plurality of nodes essential for functioning of the blockchain network. The nodes may be devices on the blockchain network that are capable of performing one or more assigned tasks. A node can be, for example, a computing device including a processing unit. The node may be configured to store copies of a blockchain transaction and/or to execute a transaction. In the present invention, the transaction may be a record of an event associated with the industrial plant. The method comprises receiving a request from an external entity to access the asset data stored in the distributed ledger system. For example, the external entity may be an auditing agency, customer service personnel, etc. In an embodiment, the distributed ledger system comprises at least one block. The block may include a first transaction associated with the asset data, a second transaction associated with the asset data and a security code associated with the first transaction and the second transaction. The security code may be a unique key generated by an authenticator node which is an indication of authenticity of the transactions associated with the assets which may be recorded in the distributed ledger system. The security code may be configured to prevent unauthorized modification to the first transaction and the second transaction. In another embodiment, the request received form the external entity may include at least one part of a unique key pair.

The method further comprises validating the request from the external entity to access the asset data stored in the distributed ledger system. The validation of the request may be performed using the unique key pair. For example, the unique key pair may be an encryption key. The method further comprises providing access to the asset data to the external entity if the request is successfully validated.

According to a preferred embodiment, the method comprises receiving the asset data associated with the one or more assets in the industrial plant. The asset data may be received from the one or more assets present in the industrial plant. Further, the first transaction associated with the asset data is generated. In an embodiment, the first transaction comprises a transaction hash for the asset data associated with the assets in the distributed ledger system. The method comprises storing the first transaction associated with the asset data in the distributed ledger system. Advantageously, the first transaction forms a genesis block in the distributed ledger system using which the subsequent blocks in the distributed ledger system may be generated.

According to another preferred embodiment, the method comprises generating the security code by the authenticator node in the distributed ledger system. The blockchain network may include one or more types of nodes. The authenticator node may be a computing device configured to generate one or more security codes for every transaction associated with the assets in the industrial plant. The security code may be a unique key generated by the authenticator node which is an indication of authenticity of the transactions associated with the assets which may be recorded/stored in the distributed ledger system. Furthermore, the method comprises generating the second transaction associated with the asset data. The second transaction is a key associated with the asset data and may include a hash information depicting the asset data. In an embodiment, the second transaction is generated after the first transaction and the security code is generated. The second transaction may be a function of the security code. In an alternate embodiment, the second transaction may also be a function of the first transaction. The method further comprises publishing the security code associated with the asset data corresponding to the assets such that the external entity may access the security code. Publication of the security code enables an external entity to identify the authenticity of the asset data stored in the distributed ledger system.

Advantageously, the method enables introducing a layer of immutability such that the asset data is not tampered with. Additionally, the method enables transparency in management of asset data.

According to another embodiment, the method further comprises auditing the asset data stored in the distributed ledger system. The method comprises determining whether the security code associated with the asset data matches with the published security code. Additionally, if the security code associated with the asset data matches with the published security code, a notification is generated indicating that the asset data in the distributed ledger system is authentic. Advantageously, the authenticity of the asset data recorded in the distributed ledger system may be effectively determined.

According to an embodiment, the security code comprises a time stamp and a unique key associated with the authenticator node in the distributed ledger system. The security code associated with the asset data may be generated at regular time intervals. Therefore, a plurality of security codes may be generated by the authenticator node in the distributed ledger system. The time interval may be pre-defined by a user of the distributed ledger system and/or the industrial plant. Advantageously, the presence of the time stamp and the unique key associated with the authenticator node enables immutability of the asset data.

According to yet another embodiment, the block comprises at least one portion of a hash information associated with one or more previously generated blocks in the distributed ledger system. The portion of the hash information associated with the one or more previously generated blocks may act as an evidence of the asset data being tamper-proof.

According to another embodiment, in validating the request from the external entity, the method comprises generating a first part of the unique key pair for the external entity upon receipt of the request to access the asset data. The first authentication key may be an encryption key generated for authenticating the external entity. Then, the method comprises providing the first part of the unique key pair to the external entity for accessing the asset data corresponding to the one or more assets in the industrial plant. Additionally, the method comprises receiving a second part of the unique key pair from the external entity. In an embodiment, the second part of the unique key pair may be cryptographically associated with the first part of the unique key pair. For example, the second part of the unique key pair may enable to decrypt the first part of the unique key pair. The method comprises validating the external entity if a match is found between the first authentication key and the second authentication key. In an embodiment, if the second authentication key decrypts the first authentication key, a match may be said to be found between the first authentication key and the second authentication key. In a further embodiment, the first authentication key and the second authentication key may be parts of the unique identifier. Advantageously, the access to the plant data is provided to the external entities that are successfully validated. Therefore, security of the asset data is maintained.

According to a further embodiment, the method comprises validating the external entity using a combination of public and private keys. For example, the first authentication key is a public key and the second authentication key is a private key. Advantageously, the access to the plant data is provided to the external entities that are successfully validated. Therefore, security of the asset data is maintained.

The object of the present invention is achieved by a device for managing asset data associated with one or more assets in an industrial plant. The device comprises one or more processing units and a memory communicatively coupled to the one or more processing units. The memory includes a data management module configured to perform the method steps as described above.

The object of the present invention is achieved by a distributed ledger system comprising a network and one or more nodes communicatively coupled to the network. The one or more nodes include computer readable instructions, which when executed by the one or more nodes, cause the one or more nodes to perform the method steps as described above.

The object of the present invention is achieved by a computer program product comprising a computer program, the computer program being loadable into a storage unit of a system, including program code sections to make the system execute the method steps described above when the computer program is executed in the system.

The object of the present invention is achieved by a computer-readable medium, on which program code sections of a computer program are saved, the program code sections being loadable into and/or executable in a system to make the system execute the method described above when the program code sections are executed in the system.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a distributed ledger system, according to an embodiment of the present invention;
- FIG 2: is a block diagram of a node or device for processing a transaction in a blockchain network, according to an embodiment of the present invention;
- FIG 3A: illustrates a flowchart of a method of managing asset data in an industrial plant, according to an embodiment of the present invention;
- FIG 3B: illustrates a flowchart of a method of generating a block in the distributed ledger system, according to an embodiment of the present invention;
- FIG 4: illustrates a block generated in the distributed ledger system, according to an embodiment of the present invention;
- FIG 5: illustrates a series of blocks generated in the blockchain network, according to an embodiment of the present invention;
- FIG 6: illustrates a flowchart of a method of validating a request from an external entity, according to an embodiment of the present invention; and
- FIG 7: illustrates a table view of transaction details associated with the industrial plant, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

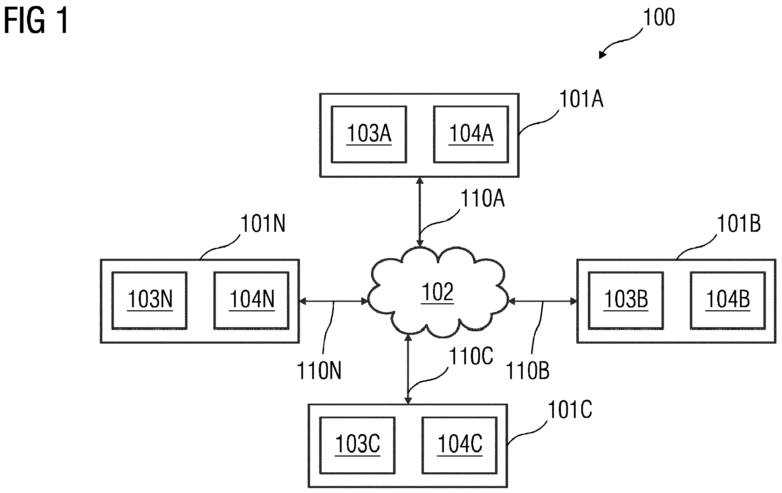

FIG 1 is a schematic representation of a distributed ledger system 100, according to an embodiment of the present invention. The terms 'distributed ledger system', 'distributed data management system' and 'blockchain network' are interchangeably used throughout the document. The terms 'node' and 'device' are interchangeably used throughout the document. The distributed ledger system 100 includes a plurality of nodes 101A-N and a network 102 to which the plurality of nodes 101A-N are connected. In an embodiment, the plurality of nodes 101A-N include at least one authenticator node. The nodes 101A-N may include one or more computing devices capable of executing one or more transactions in the blockchain network 100. If a transaction is successfully executed by one or more nodes 101A-N, a block is added to the blockchain network 100. The one or more nodes 101A-N may be geographically distributed. Each of the nodes 101A-N is capable of communicating with each other using respective communication interfaces 104A-N using communication links 110A-N via the Internet or the network 102. The communication links 110A to 110N can be wired or wireless links. The one or more nodes 101A-N may have an operating system and at least one software module/program 103A-N for performing desired operations in the distributed ledger system 100.

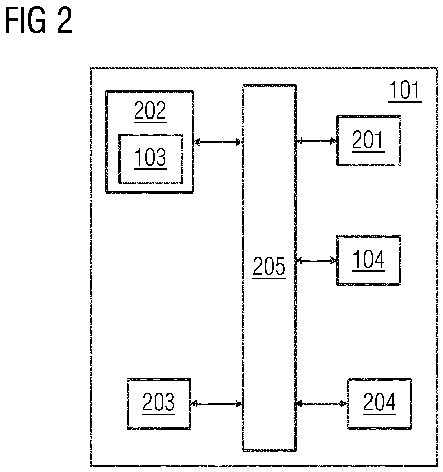

The one or more nodes 101A-N are further illustrated in greater detail in FIG 2. Referring to FIG 2, the node 101 includes one or more processing units 201, a memory 202, a storage unit 203, a communication interface 104, a standard interface or bus 205 The node 101 may be an exemplary embodiment of a computing device. The node 101 can be a desktop computer, laptop computer, tablet, a workstation, a virtual machine running on host hardware, a microcontroller, or an integrated circuit. As an alternative, the node 101 can be a cluster of computers or a cloud computing device.

The one or more processing units 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the processes either in parallel or switching between active and passive calculation processes.

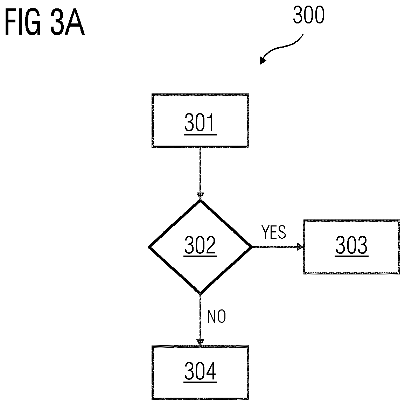

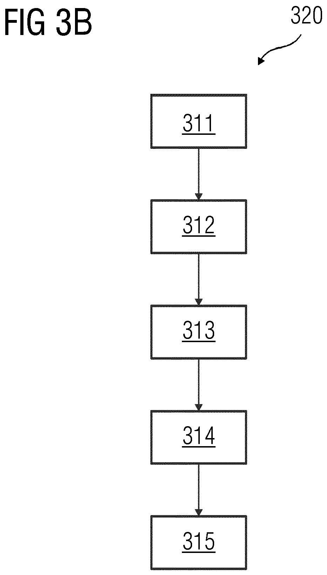

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes a data management module 103 stored in the form of machine-readable instructions on any of the above-mentioned storage media and may be in communication with and executed by processing unit 201. When executed by the processing unit 201, the data management module 103 causes the processing unit 201 to manage asset data associated with assets in an industrial plant, in the distributed ledger system 100. Method steps executed by the processing unit 201 to achieve the abovementioned functionality are elaborated upon in detail in FIGs 3, 4, and 5.

The storage unit 203 may be a non-transitory storage medium which stores a transaction database. The transaction database is configured to store an event history of the one or more nodes 101A-N in the distributed ledger system 100. The bus 205 acts as interconnect between the processing unit 201, the memory 202, the storage unit 203, and the network interface 104. The device 101 may also include an input unit 204 which may include input means such as keypad, touch-sensitive display, camera (such as a camera receiving gesture-based inputs), etc.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

Disclosed embodiments provide systems and methods for processing at least one transaction in a blockchain network. In particular, the systems and methods may manage asset data associated with one or more assets in an industrial plant.

FIG 3A illustrates a flowchart of an exemplary method 300 of managing asset data associated with one or more assets in an industrial plant, in a distributed ledger system 100, according to an embodiment of the present invention. The distributed ledger system 100 may be a decentralized ledger capable of processing a plurality of transactions and add one or more blocks to the ledger such that one or more data associated with the transactions cannot be tampered with. A transaction may be a record of an event that may occur in the industrial plant. Transactions may include, for example, operational data captured by one or more sensors in the industrial plant, information associated with functioning of the one or more assets in the industrial plant, maintenance data, specification data, etc. The distributed ledger system 100 includes one or more nodes 101A-N which may be involved in executing the plurality of transactions. The nodes 101A-N may be devices that include one or more processing units that may have computing capability to process the plurality of transactions in the distributed ledger system 100.

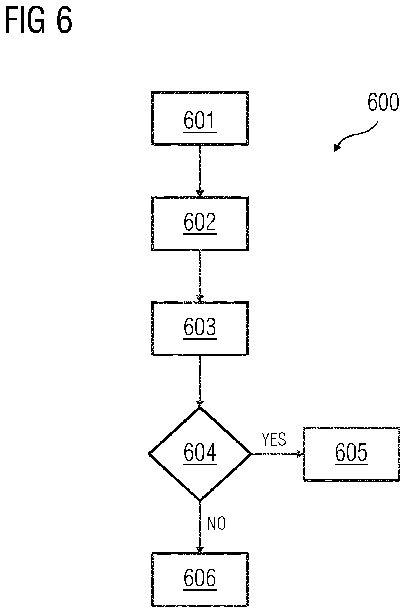

At step 301, a request to access the asset data associated with the one or more assets stored in the distributed ledger system 100, is received from an external entity. The external entity may be, for example, an auditing agency, an industrial plant support personnel, or any other user associated with the industrial plant. The blockchain network 100 may include at least one block. The block may include a first transaction associated with the asset data, a second transaction associated with the asset data and a security code associated with the first transaction and the second transaction. In an embodiment, the security code is configured to prevent unauthorized modification to the first transaction and the second transaction. The method steps describing the generation of block is illustrated in further detail in FIG 3B. The request received from the external entity may include at least one part of a unique key pair for accessing the asset data. At step 302, the request from the external entity is validated using the at least one part of the unique key pair. The method steps describing the process of validating the request is provided in further detail in FIG 6. At step 303, if the request is successfully validated, the access to the asset data is provided to the external entity. If the request is not successfully validated, the request is rejected at step 304.

FIG 3B illustrates a flowchart of a method 320 of generating a block in the blockchain network 100, according to an embodiment of the present invention. The block may include the first transaction associated with the asset data, the second transaction associated with the asset data and the security code associated with the first transaction and the second transaction. At step 311, the asset data is received from the one or more assets in the industrial plant. The asset data is data generated by the one or more assets and may include one or more sensor data associated with the industrial plant, such as temperature, flow, pressure, etc. Additionally, the asset data may depict information related to overall functioning of the industrial plant. Such asset data may be generated and received by the distributed ledger system 100 in real-time and at regular time intervals.

At step 312, a first transaction is generated in the distributed ledger system 100. The first transaction is associated with the asset data. The asset data may be processed by one or more nodes 101A-N in the distributed ledger system 100 to generate a transaction in the distributed ledger system 100. The first transaction may include hash information or a transaction hash for the asset data. In an embodiment, the transaction hash may be stored in the distributed ledger system 100 such that the transaction hash may be retrieved for later use. All blocks associated with the asset data that may be generated subsequently are linked to the genesis block in the blockchain network 100.

At step 313, a security code is generated by the authenticator node 101B in the blockchain network 100. The authenticator node 101B is a node in the blockchain network that is configured to generate at least one security code which can be linked to one or more transactions generated in the blockchain network 100. In an embodiment, the security code is linked with the first transaction associated with the asset data corresponding to the one or more assets in the industrial plant.

At step 314, a second transaction associated with the asset data is generated. The second transaction may be associated with the asset data received by the blockchain network 100 subsequent to the generation of the first transaction. Therefore, the first transaction and the second transaction are distinct from one another. In a preferred embodiment, the second transaction is a function of the security code. For example, a portion of the security code may be included in the second transaction. Alternatively, the second transaction may be generated such that the second transaction is cryptographically associated with the security code. In an alternate embodiment, the second transaction may also be a function of the first transaction. As the second transaction is a function of the security code and/or the first transaction, an additional layer of immutability is introduced to the transactions associated with the asset data recorded in the blockchain network 100. At step 315, the security code may be published in the blockchain network 100.

In an embodiment, the asset data stored in the blockchain network 100 may be audited. For example, the security code associated with the asset data may be matched with the published security code. If the security code associated with the asset data matches with the published security code, a notification may be generated indicating that the asset data in the distributed ledger system 100 is authentic. The notification may be generated, for example, in a user device associated with a user of the industrial plant. Alternatively, the notification may also be generated on a user device associated with the external entity.

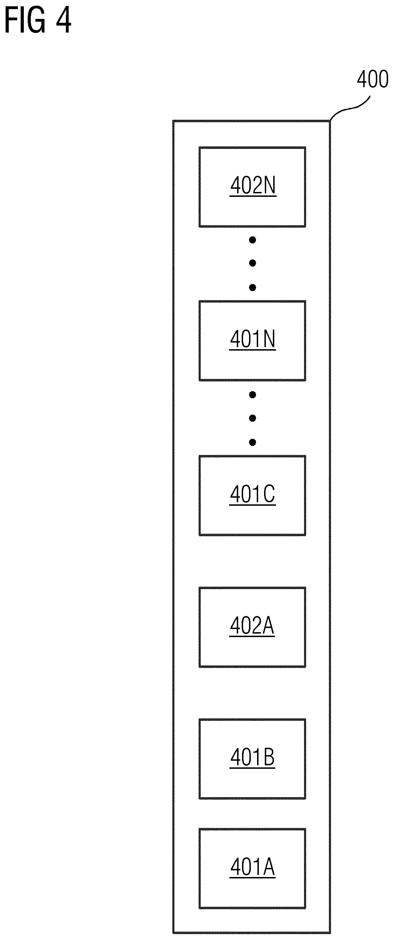

FIG 4 illustrates a block 400 generated in the blockchain network 100, according to an embodiment of the present invention. The block 400 includes a plurality of transactions 401A-N associated with the asset data corresponding to the assets in the industrial plant. The plurality of transactions 401A-N include the first transaction 401A, the second transaction 401B and subsequent transactions 401C-N generated for the asset data at regular time intervals. As depicted in FIG 4, the security code 402A-N may be generated by the authenticator node 101B such that the security code 402A-N is inserted between a set of transactions in the block 400. For example, for every set of transactions 401A-N generated for the asset data, one security code 402A may be generated. Each set of transactions may include at least one transaction associated with the asset data. Therefore, in an embodiment, the time interval for generation of security code 402A-N is different from the time interval for generation of the transactions 401A-N associated with the asset data. Thus a security code is generated after a transaction associated with the asset data is generated. Additionally, the security code 402A-N may include a time stamp and a unique key associated with the authenticator node 101B. The generation of the security code 402A-N is not controlled by the industrial plant or any user of the industrial plant. Therefore, replication of the security code 402A-N by an entity apart from authenticator node 101B is disabled. In an embodiment, the security code may be based on information that may be publicly known and is non-modifiable. Advantageously, the inability to replicate the security code 402A-N enables addition of a layer of immutability to the transactions 401AN associated with the asset data.

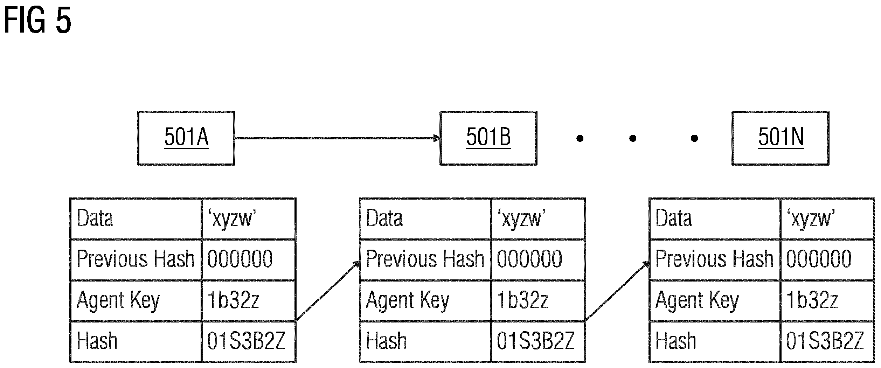

FIG 5 illustrates a series of blocks 501A-N generated in the blockchain network 100, according to an embodiment of the present invention. According to FIG 5, the genesis block 501A or the first block 501A includes the transaction hash or hash information depicting the asset data corresponding to the assets in the industrial plant. The first block 501A also includes the key associated with the authenticator node 101B. Further, the second block 501B added to the blockchain network 100 includes hash information associated with the asset data and the unique key associated with the authenticator node 101B. Additionally, the second block 501B includes at least one portion of the hash information associated with the first block 501A. Similarly, all the blocks 501N added to the blockchain network 100 may include at least one portion of a hash information associated with a previously generated block 501N-1 in the blockchain network 100, apart from the hash information associated with the asset data and the unique key associated with the authenticator node 101B. It is noteworthy that any modification to the asset data recorded as a transaction in a block may generate a hash information different from the hash information associated with the unmodified asset data. Therefore, the asset data is rendered immutable in the blockchain network 100.

FIG 6 illustrates a flowchart of a method 600 of validating the request received from the external entity to access the asset data, according to an embodiment of the present invention. At step 601, a first part of the unique key pair is generated for the external entity upon the receipt of request to access the asset data. For example, the part of the unique key pair may be an encrypted public key. At step 602, the first part of the unique key pair is provided to the external entity for accessing the asset data corresponding to the one or more assets.

At step 603, a second part of the unique key pair is received from the external entity. The second part of the unique key pair may be cryptographically associated with the first authentication key. For example, the second part of the unique key pair may be a private key which decrypts the part of the unique key pair. At step 604, it is determined whether the second part of the unique key pair matches the part of the unique key pair. In an embodiment, the second part of the unique key pair is said to match the first part of the unique key pair if the second part of the unique key pair is able to decrypt the first part of the unique key pair. At step 605, the access to the asset data stored in the distributed ledger system 100 is provided to the external entity if a match is found between the first part of the unique key pair and the second part of the unique key pair. If the second part of the unique key pair does not match the first part of the unique key pair, the access to the asset data is denied or rejected, at step 606.

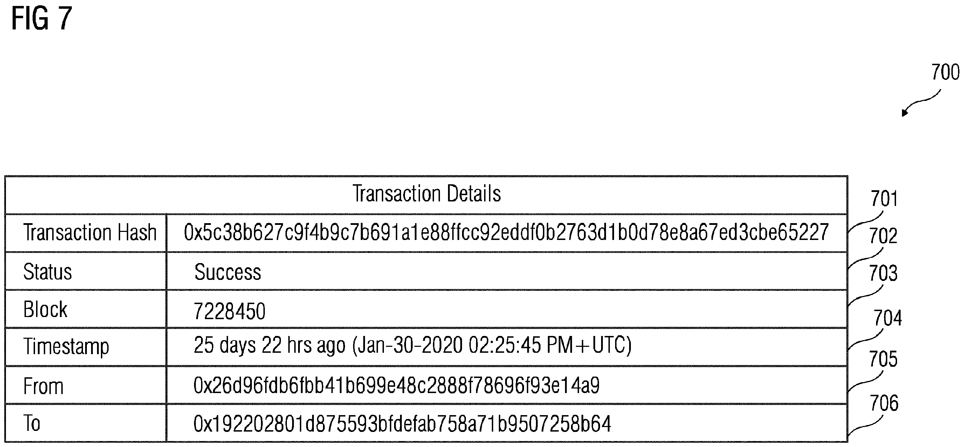

FIG 7 illustrates a table view 700 of transaction details associated with the asset data corresponding to the assets in the industrial plant, according to an embodiment of the present invention. Particularly, the table 700 illustrates a transaction hash information field 701, a status field 702, a block information field 703, a time stamp field 704, an asset location field 705, and a plant location field 706. The transaction hash information field 701 is hash information associated with the transaction generated for the asset data received from the one or more assets in the industrial plant. The status field 702 depicts status of generation of the transaction as successful or failed. The block information field 703 depicts the block in which the transaction is included in the distributed ledger system 100. The time stamp field 704 depicts time when the transaction was generated. The time stamp adds a layer of immutability to the asset data. The asset location field 705 enables identification of the exact asset with which the asset data may be associated. The plant location field 706 enables effective identification of the exact industrial plant in which the asset is located/placed.

Advantageously, the present invention enables effective management of asset data in an industrial plant. The distributed ledger system 100 provides a primary layer of immutability to the asset data. Additionally, the security code ensures that the asset data is not tampered with. Therefore, the asset data is rendered tamper-proof and management of asset data is performed in a transparent manner. Furthermore, the asset data can be shared with an external entity in a secure manner, thereby reducing the risk of loss of data and loss of quality of the data.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### Bezugszeichenliste / List of reference numbers

100 Distributed ledger system/Blockchain network
101A-N Node, Device
102 Network
103A-N Software module
104A-N Communication interface
110A-N Communication links
201 Processing unit
202 Memory
203 Storage unit
204 Input unit
205 Bus
400 Block generated in blockchain network
401A-N Transactions
402A-N Security code
501A-N Blocks
700 Table view of transaction details

## Claims

1. A method of managing asset data associated with one or more assets in an industrial plant, the method (300) comprising:
receiving a request to access asset data associated with the one or more assets stored in a distributed ledger system (100) from an external entity, wherein the distributed ledger system (100) comprises at least one block (400),
and wherein the at least one block (400) comprises a first transaction (401A) associated with the asset data, a second transaction (401B) associated with the asset data, and a security code (402A-N) associated with the first transaction (401A) and the second transaction (401B),
and wherein the security code (402A-N) is configured to prevent unauthorized modification to the first transaction (401A) and the second transaction (401B),
and wherein the request comprises at least one part of a unique key pair for accessing the asset data;
validating the request to access the asset data stored in the distributed ledger system (100) from the external entity using the at least one part of the unique key pair; and
providing the access to the requested asset data stored in the distributed ledger system (100) to the external entity if the request is successfully validated.

2. The method according to claim 1, further comprising:
receiving the asset data associated with the one or more assets in the industrial plant;
generating the first transaction (401A) associated with the asset data, wherein the first transaction (401A) comprises a transaction hash for the asset data associated with the assets in the distributed ledger system (100); and
storing the first transaction (401A) associated with the asset data in the distributed ledger system (100).

3. The method according to claims 1 or 2, further comprising:
generating the security code (402A-N) by an authenticator node (101B) in the distributed ledger system (100), wherein the security code (402A-N) is linked to the first transaction (401A) associated with the asset data corresponding to the assets;
generating the second transaction (401B) associated with the asset data, wherein the second transaction (401B) is a function of the security code; and
publishing the security code (402A-N) associated with the asset data corresponding to the assets.

4. The method according to any of the aforementioned claims, further comprising auditing the asset data stored in the distributed ledger system (100).

5. The method according to claim 4, wherein auditing the asset data comprises:
determining whether the security code (402A-N) associated with the asset data matches with the published security code (402A-N); and
if the security code (402A-N) associated with the asset data matches with the published security code (402A-N), generating a notification indicating that the asset data in the distributed ledger system (100) is authentic.

6. The method according to any of the aforementioned claims, wherein the security code (402A-N) comprises a time stamp and a unique key associated with the authenticator node (101B) in the distributed ledger system (100).

7. The method according to claim 1, wherein the block (501B) further comprises at least one portion of a hash information associated with one or more previously generated blocks (501A) in the distributed ledger system (100).

8. The method according to claim 1, wherein validating the request to access the asset data from the external entity comprises:
generating a first part of the unique key pair for the external entity upon receipt of the request to access the asset data;
providing the first part of the unique key pair to the external entity for accessing the asset data corresponding to the one or more assets;
receiving a second part of the unique key pair from the external entity, wherein the second part of the unique key pair is cryptographically associated with the first part of the unique key pair; and
determining whether a valid association between the first part of the key and the second part of the key exists;
if there is a valid association between the first part of the key and the second part of the key, validating the request to access the asset data from the external entity.

9. The method according to claim 1 and 8, wherein validating the external entity using a combination of public and private keys.

10. A device (101) for managing asset data associated with one or more assets in an industrial plant, the device (101) comprising:
one or more processing units (201); and
a memory (202) communicatively coupled to the one or more processing units (201), wherein the memory (202) comprises a data management module (103) configured to perform the method steps according to any of the claims 1 to 9.

11. A distributed ledger system (100) comprising:
a network (102);
one or more nodes (101A-N) communicatively coupled to the network (102), wherein the one or more nodes (101A-N) comprise computer readable instructions, which when executed by the one or more nodes (101A-N), cause the one or more nodes (101A-N) to perform method steps according to any of the claims 1 to 9.

12. A computer program product comprising machine readable instructions, that when executed by one or more processing units (201), cause the one or more processing units (201) to perform method steps according to any of the claims 1-9.

13. A computer readable medium on which program code sections of a computer program are saved, the program code sections being loadable into and/or executable in a system to make the system execute the method steps according to any of the claims 1 to 9 when the program code sections are executed in the system (100).
